# EUROPEAN PATENT APPLICATION

(11) **EP 4 372 619 A1**
(43) Date of publication of application: **22.05.2024**
(21) Application number: 23744352.8
(22) Date of filing: 28.07.2023
(51) Int. Cl.: G06N 3/045, G06N 3/08, G06N 3/063, G06F 9/448

(54) **ELECTRONIC DEVICE AND METHOD FOR DRIVING MODELS ON BASIS OF INFORMATION COMMONLY USED BY MODELS**

(30) Priority: 17.08.2022 KR 20220102500
(71) Applicant: Samsung Electronics Co., Ltd., Suwon-si, Gyeonggi-do 16677 (KR)
(72) Inventor: KIM, Jungbae, Suwon-si Gyeonggi-do 16677 (KR); LEE, Euntaik, Suwon-si Gyeonggi-do 16677 (KR); KIM, Seungjin, Suwon-si Gyeonggi-do 16677 (KR); LEE, Hyeonsu, Suwon-si Gyeonggi-do 16677 (KR); KIM, Mooyoung, Suwon-si Gyeonggi-do 16677 (KR)
(74) Representative: Gulde & Partner
(86) International application number: PCT/KR2023/011073
(87) International publication number: WO 2024/039105

(57) **Abstract**

According to an embodiment, a processor of an electronic device is configured to identify first graphs included in the first model based on request for driving a first model stored in a non-volatile memory of the electronic device. The processor is configured to identify at least one graph among second graphs which is corresponded to at least one of the first graphs, wherein the second graphs are included in one or more second models stored in the volatile memory and are different from the first model. The processor is configured to obtain an instance for controlling the first model based on the at least one graph identified among the second graphs. The processor is configured to execute a function associated with the first model based on the instance.

## Description

### [Technical Field]

The following descriptions relate to an electronic device and a method for driving models based on information commonly used by models.

### [Background Art]

With the development of an electronic device, technology development associated with the electronic device equipped with Artificial Intelligence (AI) technology has recently been progressing. The electronic device to which the artificial intelligence technology is applied may learn and judge a surrounding situation by itself, independently of updating instructions by an external signal. As the electronic device to which the artificial intelligence technology is applied actively learn and judge the surrounding situation, it may be possible to automatically respond to a situation requiring human judgment based on the electronic device.

### [Disclosure]

### [Technical Solution]

According to an embodiment, an electronic device may comprise a non-volatile memory, a volatile memory, and a processor. The non-volatile memory may store instructions. The instructions may be configured to, when executed by the processor, cause the electronic device to identify, based on request for driving a first model stored in the non-volatile memory, first graphs included in the first model. The instructions may be configured to, when executed by the processor, cause the electronic device to identify at least one graph among second graphs which is corresponded to at least one of the first graphs, wherein the second graphs are included in one or more second models stored in the volatile memory and are different from the first model. The instructions may be configured to, when executed by the processor, cause the electronic device to obtain an instance for controlling the first model based on the at least one graph identified among the second graphs. The instructions may be configured to, when executed by the processor, cause the electronic device to execute a function associated with the first model based on the instance.

According to an embodiment, a method of an electronic device may comprise identifying, based on request for driving a first model stored in a non-volatile memory of the electronic device, first graphs included in the first model. The method may comprise identifying, among second graphs included in one or more second models stored in a volatile memory of the electronic device which are different from the first model, at least one graph corresponding to at least one of the first graphs. The method may comprise obtaining, based on the at least one graph identified among the second graphs, an instance for controlling the first model. The method may comprise executing, based on the instance, a function associated with the first model.

According to an embodiment, an electronic device, may comprise a volatile memory and a processor. The non-volatile memory may store instructions. The instructions may be configured to, when executed by the processor, cause the electronic device to identify at least one graph associated with both the first model and a second model different from the first model in the volatile memory, based on request for executing a first function regarding a first model associated with an artificial neural network. The instructions may be configured to, when executed by the processor, cause the electronic device to identify, based on identifying the at least one graph, an input data that is inputted to the at least one graph based on execution of a second function regarding the second model. The instructions may be configured to, when executed by the processor, cause the electronic device to execute, based on identifying that the input data is inputted to the at least one graph based on execution of the first function, the first function based on an output data which is obtained from the at least one graph based on execution of the second function and is corresponding to the input data.

According to an embodiment, a method of an electronic device, may comprise in a volatile memory of the electronic device, identifying, based on request for executing a first function regarding a first model associated with an artificial neural network, at least one graph associated with both the first model and a second model different from the first model. The method may comprise identifying, based on identifying the at least one graph, an input data that is inputted to the at least one graph based on execution of a second function regarding the second model. The method may comprise executing, based on identifying that the input data is inputted to the at least one graph based on execution of the first function, the first function based on an output data which is obtained from the at least one graph based on execution of the second function and is corresponding to the input data.

### [Description of the Drawings]

FIG. 1 is a block diagram of an electronic device according to an embodiment.
FIG. 2 illustrates an example of a model driven by an electronic device according to an embodiment.
FIG. 3 illustrates an example of applications and/or processes executed for driving different models in an electronic device according to an embodiment.
FIG. 4 illustrates an example of an operation in which an electronic device shares output data obtained from a graph commonly included in different models, according to an embodiment.
FIG. 5 illustrates an example of an operation in which an electronic device performs optimization on a graph commonly included in different models, according to an embodiment.
FIG. 6 illustrates an example of a flowchart for describing an operation of an electronic device, according to an embodiment.
FIG. 7 illustrates an example of a flowchart for describing an operation of an electronic device, according to an embodiment.

### [Mode for Invention]

Hereinafter, various embodiments of the present document will be described with reference to the accompanying drawings.

The various embodiments and terms used herein are not intended to limit the technical features described herein to specific embodiments and should be understood to include various modifications, equivalents, or substitutes of the embodiment. With respect to the description of the drawings, similar reference numerals may be used for similar or related components. The singular form of the noun corresponding to the item may include one or more of the items unless clearly indicated differently in a related context. In this document, each of the phrases such as "A or B", "at least one of A and B", "at least one of A, B and C", "at least one of A, B, or C", and "at least one of A, B, or C" may include any one of the phrases together, or all possible combinations thereof. Terms such as "the first", "the second", or "first", or "second" may be used simply to distinguish a corresponding component from another corresponding component, and are not limited to other aspects (e.g., importance or order). When some (e.g., the first) component is referred to as "coupled" or "connected" in another (e.g., the second) component, with or without the term "functional" or "communicatively", it means that some of the components can be connected directly (e.g., wired), wirelessly, or through a third component.

The term "module" used in various embodiments of the present document may include a unit implemented in hardware, software, or firmware and be used interchangeably with terms such as logic, logic block, component, or circuitry, for example. The module may be a minimum unit or a part of the integrally configured component or the component that performs one or more functions. For example, according to an embodiment, the module may be implemented in the form of an application-specific integrated circuit (ASIC).

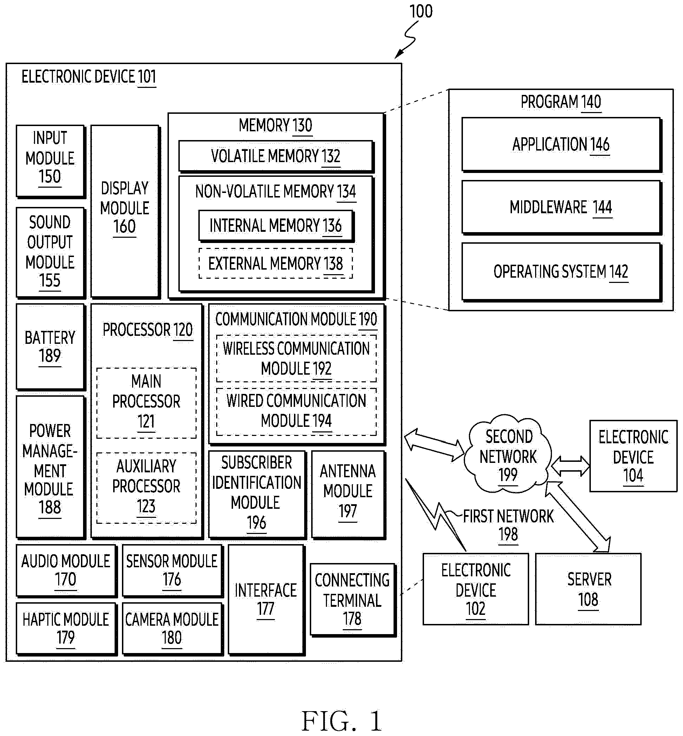

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

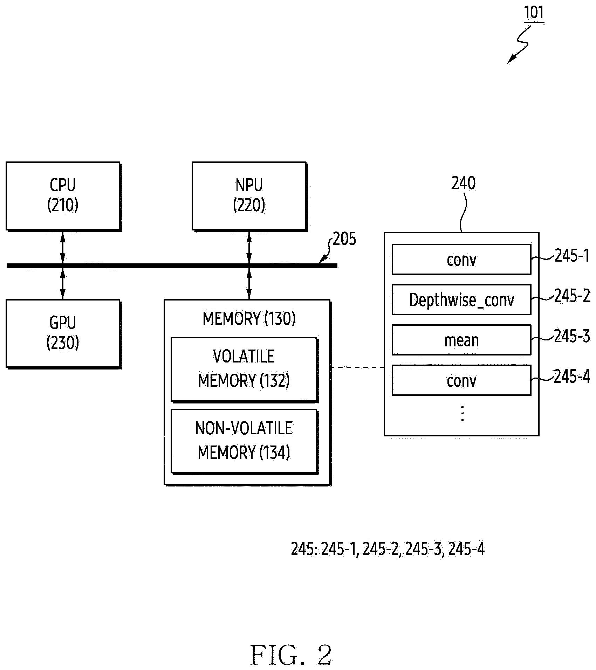

FIG. 2 illustrates an example of a model 240 driven by an electronic device 101 according to an embodiment. The electronic device 101 of FIG. 2 may be an example of the electronic device 101 of FIG. 1. Referring to FIG. 2, the electronic device 101 according to an embodiment may include at least one of a central processing unit (CPU) 210, a neural processing unit (NPU) 220, a graphic processing unit (GPU) 230, or a memory 130. The CPU 210, the NPU 220, the GPU 230, and the memory 130 may be electronically and/or operably coupled with each other by an electronical component such as a communication bus 205. The type and/or number of hardware components included in the electronic device 101 are not limited as illustrated in FIG. 2. Hereinafter, that the hardware components are operably coupled may mean that a direct connection or an indirect connection between the hardware components is established by wire or wirelessly so that the second hardware component is controlled by the first hardware component among the hardware components.

Referring to FIG. 2, the electronic device 101 according to an embodiment may include the hardware component (e.g., the CPU 210, the NPU 220, the GPU 230, and/or the memory 130) for performing an operation (or computation) on the model 240 associated with an artificial neural network. The model 240, and/or the artificial neural network, may include a cognitive model implemented with software or hardware that mimics the computational power of a biological system by using a large number of artificial neurons (or a node). For example, the electronic device 101 according to an embodiment may execute functions similar to human cognitive action or learning process based on the model 240. Based on computations indicated by the model 240 and performed sequentially by a plurality of parameters, the electronic device 101 may output data including generalized information about the input data. The memory 130 of the electronic device 101 may store the plurality of parameters associated with the model 240. The CPU 210, the NPU 220, and/or the GPU 230 of the electronic device 101 may include a circuit for performing the computations, which is performed sequentially by the plurality of parameters.

According to an embodiment, the CPU 210 of the electronic device 101 may include the hardware component for processing data based on one or more instructions. The hardware component for processing data may include, for example, an arithmetic and logic unit (ALU), a floating point unit (FPU), and/or a field programmable gate array (FPGA). In an embodiment, the CPU 210 may be referred to as an application processor (AP). The number of CPUs 210 may be one or more. For example, the CPU 210 may have a structure of a multi-core processor such as a dual core, a quad core, or a hexa core. The CPU 210 of FIG. 2 may be an example of a processor 120 and/or a main processor 121 of FIG. 1.

The NPU 220 of the electronic device 101 according to an embodiment may include the hardware component dedicated to the computations associated with the model 240. For example, the NPU 220 may include a plurality of circuits for performing the computations (e.g., multiplication and/or addition) performed sequentially and/or in parallel based on the model 240. The plurality of circuits included in the NPU 220 may be referred to as neural engines. The NPU 220 may perform the computations based on a preset data type (e.g., floating point number and/or integer) associated with the model 240.

The GPU 230 of the electronic device 101 according to an embodiment may include one or more pipelines that perform a plurality of operations for executing instructions associated with computer graphics and/or parallel computation. For example, the pipeline of the GPU 230 may include a graphics pipeline or rendering pipeline for generating a 3D image and generating a 2D raster image from the generated 3D image. By using graphics pipelines, the computations associated with the artificial neural network may be executed substantially simultaneously.

The CPU 210, the NPU 220, and the GPU 230 of FIG. 2 may be included as different integrated circuits in the electronic device 101 or may be included in a single integrated circuit (IC) based on a system on chip (SoC). For example, the CPU 210, the NPU 220, the GPU 230, or a combination thereof may be included in the single IC included in electronic device 101. The type of processing unit included based on the SoC is not limited to the above example, and for example, other hardware components (e.g., communication processors) not illustrated in FIG. 2 may be included in the single IC along with the CPU 210, the NPU 220, and the GPU 230. Hereinafter, in terms of the subject of the computations of the artificial neural network indicated by the model 240, the CPU 210, the NPU 220, the GPU 230, or the combination thereof may be referred to as an artificial intelligence (AI) accelerator. The AI accelerator may be referred as an accelerator.

The memory 130 of the electronic device 101 according to an embodiment may include the hardware component for storing the data and/or the instruction inputted and/or outputted to the CPU 210, the NPU 220, and/or the GPU 230. The memory 130 may include, for example, a volatile memory 132 such as a random-access memory (RAM) and/or a non-volatile memory 134 such as a read-only memory (ROM). The volatile memory 132 may include, for example, at least one of dynamic RAM (DRAM), static RAM (SRAM), cache RAM, and pseudo SRAM (PSRAM). The non-volatile memory 134 may include, for example, at least one of programmable rom (PROM), erasable prom (EPROM), electrically erasable prom (EEPROM), flash memory, hard disk, compact disk, and embedded multi media card (eMMC). The memory 130, the volatile memory 132, and the non-volatile memory 134 of FIG. 2 may correspond to each of the memory 130, the volatile memory 132, and the non-volatile memory 134 of FIG. 1.

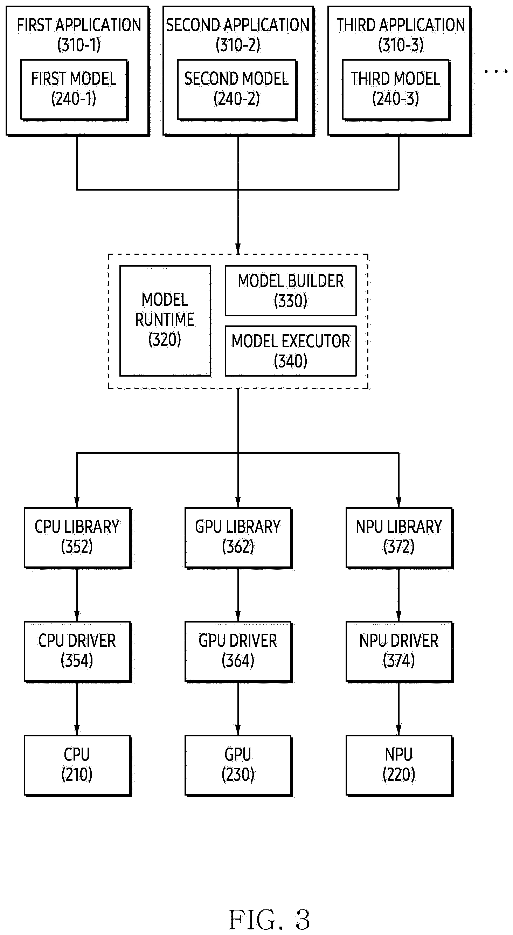

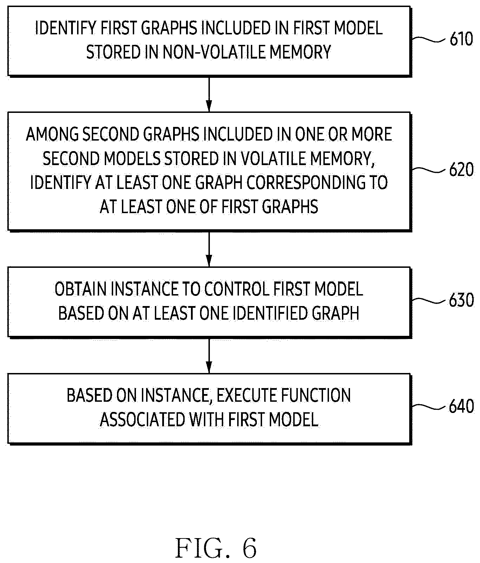

In the memory 130, the one or more instructions (or commands) indicating an operation to be performed by the CPU 210, the NPU 220, and/or the GPU 230 based on the data may be stored. A set of the one or more instructions may be referred to as firmware, operating system, process, routine, sub-routine, and/or application. For example, the CPU 210, the NPU 220, and/or the GPU 230 of the electronic device 101 may perform at least one of the operations of FIGS. 6 to 7 when the set of a plurality of instructions distributed in the form of the operating system, the firmware, the driver, and/or the application is executed. Hereinafter, that the application is installed in the electronic device 101 may mean that the one or more instructions provided in the form of the application are stored in the memory 130 of the electronic device 101, and may mean that the one or more applications are stored in an executable format (e.g., a file having an extension preset by the operating system of the electronic device 101) by the CPU 210, the NPU 220, and/or the GPU 230 of the electronic device 101. According to an embodiment, the one or more applications executed by the CPU 210 of the electronic device 101 and for controlling the CPU 210, the NPU 220, and/or the GPU 230 will be described with reference to FIG. 3.

According to an embodiment, the electronic device 101 may identify the model 240 based on one or more files stored in the non-volatile memory 134. The one or more files may be associated with the application (e.g., an application 146 of FIG. 1), middleware (e.g., middleware 144 of FIG. 1), and/or the operating system (e.g., an operating system 142 of FIG. 1), installed in the electronic device 101. In an embodiment where the model 240 associated with the application is stored in the non-volatile memory 134, the CPU 210 may identify the model 240 stored in the non-volatile memory 134 based on the execution of the application. Identifying the model 240 stored in the non-volatile memory 134 may include copying (or loading) the plurality of parameters stored in the non-volatile memory 134 and associated with the model 240, to the volatile memory 132. The identifying the model 240 stored in the non-volatile memory 134 may include obtaining the plurality of instructions for performing computations indicated by the model 240 based on the plurality of parameters stored in the volatile memory 132. The accelerators such as the CPU 210, the NPU 220, and/or the GPU 230 may execute one or more functions associated with the model 240 indicated by the plurality of parameters stored in the volatile memory 132, based on the plurality of instructions. The one or more functions may include at least one of a function of performing training of the model 240, a function of performing inference on the input data based on the model 240, a function of performing image-based object recognition, voice recognition, and/or handwriting recognition by using the trained model 240, and a function personalized to the user of electronic device 101 based on a neural network. However, the embodiment is not limited thereto.

According to an embodiment, the electronic device 101 may perform computations indicated by the model 240 based on the plurality of parameters associated with the model 240. The plurality of parameters may include weights assigned to a plurality of nodes indicated by the model 240 and/or a connection between the plurality of nodes. The plurality of parameters may include a hyperparameter associated with the model 240. The hyperparameter may include, for example, at least one of a learning rate, a cost function, a regularization parameter, a mini-batch size, the number of training iterations, the number of hidden layers, a meta parameter, or a free parameter.

According to an embodiment, the electronic device 101 may perform the computations associated with the input data based on the model 240, by using the accelerator. The electronic device 101 may obtain the output data from the input data inputted to the model 240 based on performing chained (or serial or consecutive) calculations based on the plurality of parameters of the model 240. The input data may include a plurality of numeric values preprocessed to be inputted to the model 240. The plurality of the numeric values may indicate a vector to be inputted to the model 240. The electronic device 101 may obtain at least one numeric value indicating the output data by changing a plurality of numeric values included in the input data based on the plurality of parameters indicated by the model 240 and the computations. The computations and/or the plurality of parameters, associated with the model 240, may be distinguished by operation, graph, and/or layer.

Referring to FIG. 2, an exemplary order of operations 245-1, 245-2, 245-3, and 245-4 included in the model 240 is illustrated. Each of the operations 245-1, 245-2, 245-3, and 245-4 may include a group of the computations that the electronic device 101 performs continuously based on the driving of the model 240. The operations 245-1, 245-2, 245-3, and 245-4 may be distinguished by the type of the computation performed by the electronic device 101. Referring to FIG. 2, the electronic device 101 may sequentially perform the computations on the input data based on the order of the operations 245-1, 245-2, 245-3, and 245-4 in the model 240. For example, the operation 245-1 may indicate one or more convolution computations based on a convolution filter associated with the model 240. The operation 245-2 performed after the operation 245-1 may indicate one or more depthwise convolution computations associated with the model 240 to the input data changed by the operation 245-1. The operation 245-3 performed after the operation 245-2 may indicate mean pooling computations associated with the model 240 to the input data changed by the operations 245-1 and 245-2. The operation 245-4 performed after the operation 245-3 may indicate convolution computations associated with the model 240 to the input data changed by operations 245-1, 245-2, 245-3, and 245-4.

In an embodiment, the numeric values included in the input data inputted to the model 240 may be changed based on connections between the plurality of nodes included in the model 240. The plurality of nodes may be distinguished by a unit of a layer. In an embodiment, the plurality of parameters include weights connecting two nodes of different layers of the model 240, the electronic device 101 may obtain values corresponding to nodes of another layer connected to the specific layer by applying weights to values corresponding to nodes of a specific layer. In the model 240, a layer including nodes to which values included in the input data are inputted may be referred to as the input layer. A last layer among the layers sequentially connected in the model 240 may be referred to as the output layer. Each of the operations 245-1, 245-2, 245-3, and 245-4 of FIG. 2 may include at least one of the layers included in the model 240. For example, the operation 245-1 may indicate a group of interconnected layers based on the convolution filter among the layers in the model 240. Hereinafter, the graph may mean a graph formed by connections between nodes included in the layers. The graph included in the model 240 may be distinguished by the operations 245-1, 245-2, 245-3, and 245-4 included in the model 240.

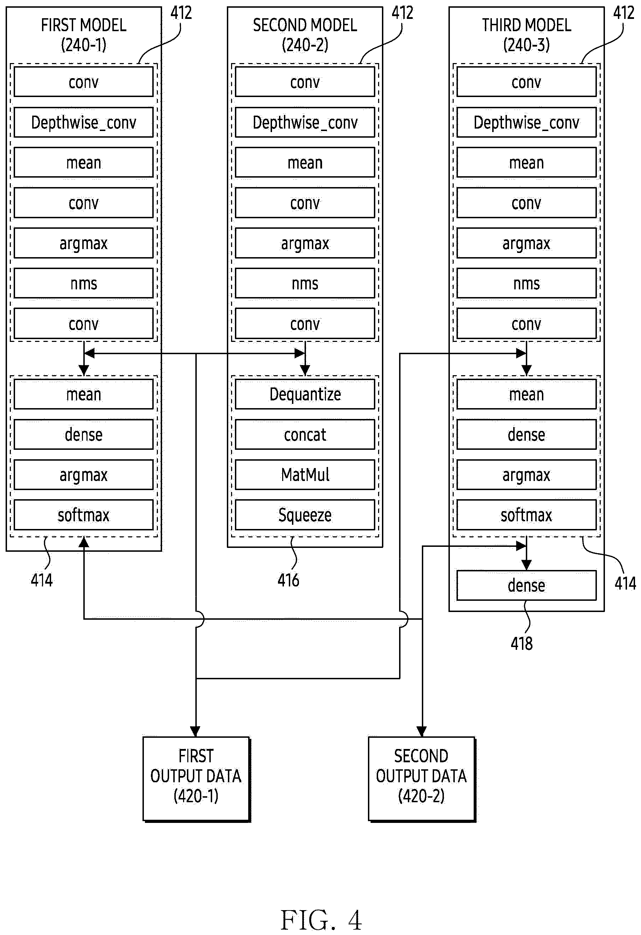

According to an embodiment, the electronic device 101 may execute functions associated with the artificial neural network by driving models (e.g., the model 240) provided from different applications. In an embodiment, the electronic device 101 may identify a similarity between the models. For example, based on an architecture, a backbone network, the hyperparameter (e.g., the hyperparameter applied to the backbone network), and/or matrix data commonly used in the design of the models, the models may commonly include a similar graph, and/or an operation. According to an embodiment, while loading the model 240 from the non-volatile memory 134 into the volatile memory 132, the electronic device 101 may identify the similarity between the model 240 and another model prestored in the volatile memory 132. Based on the similarity, the electronic device 101 may refrain from loading parameters used for at least one operation (or graph) overlapping with the other model, among the plurality of parameters associated with the model 240, into the volatile memory 132. Since the parameters are stopped from being loaded into the volatile memory 132, the electronic device 101 may reduce overhead and/or memory usage of the volatile memory 132. According to an embodiment, the electronic device 101 may input the output data obtained based on an operation performed in a specific model to another model based on the similarity between the models. Since the output data is input to the other model, the electronic device 101 may reduce the amount of operation based on the other model. An example of an operation in which the electronic device 101 inputs the output data obtained from the specific model to the other model according to an embodiment will be described with reference to FIG. 4.

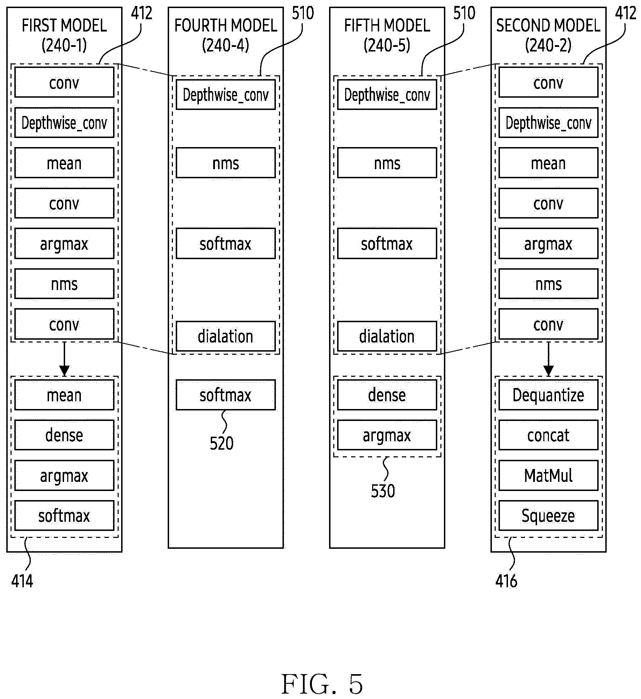

In an embodiment where the models stored in the electronic device 101 commonly include at least one operation and/or graph, the electronic device 101, the electronic device 101 may use a result of optimizing the at least one operation included in the specific model for optimizing another model. Optimizing the model 240 may include at least one of replacing at least one of the operations 245-1, 245-2, 245-3, and 245-4 included in the model 240, and/or reducing layers included in the operations 245-1, 245-2, 245-3, and 245-4. The optimizing the model 240 may be performed based on preset accuracy, and/or inference latency. An example of an operation in which the electronic device 101 performs optimization of the model 240 according to an embodiment will be described with reference to FIG. 5.

Hereinafter, with reference to FIG. 3, an example of an operation in which the electronic device 101 identifies an operation and/or a graph commonly included in the models according to an embodiment, will be described.

FIG. 3 illustrates an example of applications and/or processes executed for driving different models in an electronic device according to an embodiment. The electronic device of FIG. 3 may be an example of an electronic device 101 of FIGS. 1 to 2. For example, a CPU 210, a NPU 220, and a GPU 230 of FIG. 2 may include the CPU 210, the NPU 220, and the GPU 230 of FIG. 3. Referring to FIG. 3, a function and/or a sub-routine included in one or more processes executed in the electronic device according to an embodiment are distinguished and illustrated according to information transmitted between the function and/or the sub-routine. The electronic device according to an embodiment may execute the one or more processes distinguished by the blocks illustrated in FIG. 3, based on one or more instructions stored in a volatile memory (e.g., a volatile memory 132 of FIG. 2). The processes may be executed in a second state distinct from the first state visible to the user, such as, for example, a background process and/or a daemon.

Referring to FIG. 3, the electronic device according to an embodiment may identify a first model 240-1 to a third model 240-3 included in each of a first application 310-1 to a third application 310-3, based on execution of the first application 310-1 to the third application 310-3. The first model 240-1 to the third model 240-3 may be an example of a model 240 of FIG. 2. For example, parameters indicating each of the first model 240-1 to the third model 240-3 may be stored in files corresponding to each of the first model 240-1 to the third model 240-3 in a non-volatile memory (e.g., a non-volatile memory 134 of FIG. 2) of the electronic device. Hereinafter, an operation of the electronic device for three applications and three models provided by the applications will be described, but the embodiment is not limited thereto.

According to an embodiment, the electronic device may identify request for driving a model associated with the application based on execution of the application. For example, the processor of the electronic device (e.g., the CPU 210) may identify the request based on the execution of at least one instruction for calling an API for the execution of model runtime 320 among the instructions included in the application. The model runtime 320 may include the application and/or the background process executed by the processor (e.g., the CPU 210) of the electronic device to execute one or more functions for driving the model by controlling an accelerator (e.g., the CPU 210, the NPU 220, and/or the GPU 230) in the electronic device. In an embodiment, the model runtime 320 may be referred to as a machine learning runtime. The model runtime 320 may be executed by the processor of the electronic device to support independent driving of different models stored in the electronic device. The exchange of information between the model runtime 320 and the application may be performed based on a plurality of APIs provided by the model runtime 320. For example, the electronic device may identify request for driving the first model 240-1, based on the execution of the first application 310-1, in a state in which the second model 240-2 and/or the third model 240-3 are loaded into the volatile memory, based on the execution of the second application 310-2 and/or the third application 310-3. The request may include the call of the API for loading the first model 240-1 stored in the non-volatile memory into the volatile memory.

In response to the request for driving the first model 240-1, the electronic device according to an embodiment may load the first model 240-1 into the volatile memory by executing a model builder 330. The loading the first model 240-1 may include identifying the first graphs in the first model 240-1 corresponding to each of the operations associated with an artificial neural network based on a plurality of parameters representing the first model 240-1, in the non-volatile memory. The loading the first model 240-1 may include generating a graph of nodes included in the first model 240-1 in the volatile memory. For example, the electronic device may identify the call of the API provided by the model runtime 320 to load the first model 240-1 based on the execution of the model builder 330. Based on the identifying the call of the API, the electronic device may identify a plurality of first graphs that are distinguished by a plurality of operations included in the first model 240-1 in the non-volatile memory by using the model builder 330.

According to an embodiment, the electronic device may compare second graphs stored in the volatile memory and the plurality of first graphs identified from the non-volatile memory based on the model builder 330. According to an embodiment, the electronic device may refrain from loading parameters corresponding to at least one graph corresponding to at least one of the second graphs, among parameters stored in the non-volatile memory and indicating the first graphs, into the volatile memory. For example, among the first graphs, parameters indicating at least one graph overlapping at least one of the second graphs prestored in the volatile memory may not be loaded into the volatile memory. According to an embodiment, the electronic device may selectively load parameters indicating at least one graph that is not prestored in the volatile memory, among the first graphs associated with the first model 240-1, among parameters associated with the first model 240-1. Since the electronic device selectively loads the parameters, the amount of data moving from the non-volatile memory into the volatile memory may be reduced based on the load of the first model 240-1. Since the amount of data is reduced, the bandwidth between the non-volatile memory and the volatile memory may be reduced. Since the bandwidth is reduced, power consumption and/or heat generation of the electronic device may be reduced.

According to an embodiment, the electronic device 101 may selectively load graphs different from at least one graph stored in the volatile memory among graphs in the first model 240-1 based on the model builder 330. For example, the electronic device 101 may generate the first model 240-1 in the volatile memory by connecting the at least one graph stored in the volatile memory and the loaded graphs. In a state of loading a graph into the volatile memory, the electronic device 101 may determine a priority of each of the different graphs stored in the volatile memory. The determined priority may indicate an order in which an operation based on a corresponding graph is performed. The electronic device 101 may generate and/or obtain an instance for executing a function associated with the first model 240-1 based on the first model 240-1 generated in the volatile memory. For example, the electronic device 101 may obtain the instance for controlling the first model 240-1. The instance may be a unit of task performed by a processor to perform calculations indicated by a model, such as the first model 240-1. The instance may be referred to a process, a task and/or an object.

According to an embodiment, the electronic device may control the accelerator such as the CPU 210, the NPU 220, and/or the GPU 230 based on the instance associated with the first model 240-1 stored in the volatile memory. For example, the electronic device may execute the function associated with the first model 240-1 based on the instance. That the electronic device controls the accelerator based on the instance may be performed by the execution of model executor 340. For example, in response to executing the function associated with the first model 240-1 based on the first application 310-1 corresponding to the first model 240-1, the electronic device may select any one of the CPU 210, the NPU 220, and/or the GPU 230. The electronic device may execute the function for the first model 240-1 by executing the instance based on the accelerator selected from among the CPU 210, the NPU 220, and/or the GPU 230. For example, in case that the CPU 210 is selected, the electronic device may obtain a plurality of instructions for executing the instance based on the CPU 210, by accessing the CPU library 352 based on the instance for the first model 240-1. The plurality of instructions may be sequentially inputted to the CPU 210 through a CPU driver 354. As the plurality of instructions are sequentially inputted to the CPU 210, the CPU 210 may perform operations in the first model 240-1. For example, in case that the GPU 230 is selected as the accelerator for executing the function associated with the first model 240-1, the electronic device may obtain a plurality of instructions readable by a GPU 234 based on a GPU library 362. As a plurality of instructions readable by the GPU 234 are sequentially inputted to the GPU 230 through a GPU driver 364, the GPU 230 may perform the operations associated with the first model 240-1. For example, in case that the NPU 220 is selected as the accelerator for driving the first model 240-1, the electronic device may identify the instructions and/or the API for controlling a NPU driver 374, by accessing a NPU library 372 based on the instance for the first model 240-1. The electronic device may perform the operations associated with the first model 240-1 by controlling the NPU 220 based on the identified instructions and/or the API.

According to an embodiment, the electronic device may share the output data of different models having overlapping operations and/or graph based on the model executor 340. Sharing the output data by the electronic device may be performed by the model executor 340 to reduce the number of computations performed by the accelerator by driving the different models. For example, in a state of loading each of the first model 240-1 to the third model 240-3, the electronic device may identify at least one operation and/or at least one graph commonly included in at least two models of the first model 240-1 to the third model 240-3 based on the execution of the model builder 330. The electronic device may monitor the input data and the output data for the at least one identified operation. The electronic device may bypass the repetitive performance of the at least one operation in a state of identifying that the at least one operation is repeatedly performed based on the same input data in different models.

In a state in which all the first model 240-1 to the second model 240-2 include the first graph, it is assumed that the electronic device obtains specific output data for the specific input data by inputting specific input data into the first graph in the first model 240-1 based on the model executor 340. In the above example, the electronic device may store pairs of the specific input data and the specific output data in the volatile memory based on the model executor 340. In the above example, the electronic device may input the specific output data stored in the volatile memory to another graph connected to the first graph in the second model 240-2, in response to identifying that the specific input data is inputted to the first graph, based on the driving of the second model 240-2 different from the first model 240-1, based on the model executor 340. For example, based on the specific output data stored in the volatile memory, the electronic device may bypass the operation indicated by the first graph for the specific input data based on the driving of the second model 240-2. Since the operation indicated by the first graph is bypassed, the electronic device may prevent the operation commonly included in different models from being redundantly repeatedly performed. Since the operation is prevented from being redundantly repeatedly performed, the electronic device may prevent an increase in power consumption due to the operation. Since the operation is prevented from being redundantly repeatedly performed, the electronic device may obtain the output data based on driving of the second model 240-2 at a faster speed.

Referring to FIG. 3, although the model runtime 320, the model builder 330, and the model executor 340 are illustrated in distinct blocks, the embodiment is not limited thereto. For example, functions of each of the model runtime 320, the model builder 330, and the model executor 340 may be integrated into a single runtime process. For example, the model runtime 320 may include the model builder 330 and/or the model executor 340. For example, the model builder 330 and the model executor 340 may be integrated into a single runtime process that is different from the model runtime 320.

As described above, according to an embodiment, the electronic device may share at least one operation (or graph) common to the different models. Since the at least one graph is shared, one graph stored in the volatile memory may be used for driving the different models. Similar to sharing the at least one graph, the electronic device may identify the pairs of the input data and the output data inputted to at least a portion of the different models. In case that the specific input data is inputted to a specific graph commonly included in the different models, the electronic device may bypass the computations associated with the specific graph in another model different from the specific model by using output data obtained from the specific input data based on the specific graph in the specific model. Since the computations are bypassed, the electronic device may complete the computations for the other model based on a relatively small amount of computation and/or a relatively short duration.

Hereinafter, with reference to FIG. 4, according to an embodiment, an example of an operation in which the electronic device 101 performs a computation (or an operation) corresponding to at least one of the graphs based on exemplary structures of graphs included in a plurality of models (e.g., the first model 240-1 to the third model 240-3) stored in the volatile memory will be described.

FIG. 4 illustrates an example of an operation in which an electronic device shares output data obtained from a graph commonly included in different models, according to an embodiment. The electronic device of FIG. 4 may be an example of an electronic device 101 of FIGS. 1 to 3. For example, the electronic device 101 of FIG. 2 may include the electronic device of FIG. 4. For example, a first model 240-1 to a third model 240-3 of FIG. 4 may be included in a model 240 of FIG. 2. For example, the first model 240-1 to the third model 240-3 of FIG. 3 may include each of the first model 240-1 to the third model 240-3 of FIG. 4. The operation of the electronic device described later with reference to FIG. 4 may be performed by an accelerator (e.g., a CPU 210, a NPU 220, and/or a GPU 230) illustrated in FIG. 2.

According to an embodiment, the electronic device may identify different models that are included in each of different applications (e.g., a first application 310-1 to a third application 310-3 of FIG. 3) and have partially overlapping graph. For example, the electronic device may identify the first model 240-1 to the third model 240-3 of FIGS. 3 to 4. One or more operations in the first model 240-1 to the third model 240-3 and/or one or more graphs corresponding to the one or more operations may be similar to each other independently of the first model 240-1 to the third model 240-3 being provided through different applications.

In an embodiment of FIG. 4, it is assumed that all the first model 240-1 to the third model 240-3 include operations and/or a group 412 of graphs. It is assumed that both the first model 240-1 and the third model 240-3 share not only the group 412 but also the group 414 of graphs connected next to the group 412. It is assumed that a second model 240-2 includes a group 416 of graphs different from other models next to the group 412. It is assumed that the third model 240-3 includes a graph 418 different from other models next to the groups 412 and 414. Based on the group 412 included in all of the first model 240-1 to the third model 240-3, a graph by sequential connection of an operation on convolution computations (conv), an operation on depthwise convolution computations (depthwise_conv), an operation on average pooling computations (mean), an operation on convolution computations (conv), an operation on arguments of the maxima (argmax) computations (argmax), an operation on non-maximum-suppression computations (nms) and an operation on convolution computations (conv) may be formed. Based on the group 414 included in both the first model 240-1 and the third model 240-3, a graph by sequential connection of the operation on average pooling computations (mean), an operation on dense layer computations (dense), an operation on argmax computations (argmax), and an operation on softmax computations (softmax) may be formed. Based on the group 416 included in the second model 240-2, a graph by sequential connection of an operation on dequantization computations (dequantize), an operation on concatenation computations (concat), an operation on matrix multiplication computations (matmul), and an operation on squeeze layers (squeeze) may be formed.

According to an embodiment, the electronic device may share a graph commonly included in at least two models among the first model 240-1 to the third model 240-3, in a state in which all of the first model 240-1 to the third model 240-3 are loaded. The electronic device may obtain information that indicates a plurality of graphs (e.g., the graphs included in the groups 412 and 414) stored in a non-volatile memory and included in the first model 240-1 based on request for executing the first function for the first model 240-1 associated with an artificial neural network. Based on the request, the electronic device may identify at least one graph associated with the first model 240-1 and other models different from the first model 240-1 in a volatile memory (e.g., a volatile memory 132 of FIG. 3). For example, at least one graph corresponding to at least one of the first graphs in the first model 240-1 may be identified., among the second graphs different from the first model 240-1 and included in the second model 240-2 stored in the volatile memory.

For example, based on the request for executing the first function for the first model 240-1, the electronic device may identify the at least one graph that matches at least one of the second graphs, by comparing the plurality of parameters representing the first graphs (e.g., the graphs included in the groups 412 and 414) in the first model 240-1 and the plurality of parameters representing the second graphs included in other models stored in the volatile memory. The electronic device may identify at least one graph corresponding to at least one operation commonly performed by the first model 240-1 and other models stored in the volatile memory (e.g., the second model 240-2 to the third model 240-3) among different operations associated with the artificial neural network. Referring to FIG. 4, the electronic device may identify the group 412 of the graphs in the second model 240-2 and/or the third model 240-3 having the same structure as the group 412 of the graphs in the first model 240-1. The electronic device may store the first model 240-1 in a volatile memory, based on a group 412 of graphs stored in volatile memory and associated with both of the second model 240-2 and the third model 240-3. In an embodiment, the first model 240-1 stored in the volatile memory may be stored based on a preset format readable by different accelerators (e.g., the CPU 210, the NPU 220, and/or the GPU 230 of FIG. 2) included in the electronic device.

According to an embodiment, the electronic device may form a cross-connection of the graphs included in each of the first model 240-1 to the third model 240-3 in the volatile memory, in a state of storing the first model 240-1 to the third model 240-3 in the volatile memory. The cross-connection may be formed by the electronic device based on the execution of a model builder 330 of FIG. 3. For example, based on information indicating the graphs included in each of the first model 240-1 to the third model 240-3, the electronic device may store parameters indicating the group 412 of graphs in a first area of the volatile memory. The electronic device may store the first model 240-1 in the volatile memory based on the first area and a second area of the volatile memory in which parameters indicating the group 414 of graphs are stored. The electronic device may store the second model 240-2 in the volatile memory based on the first area and a third area of the volatile memory in which parameters indicating the group 416 of graphs are stored. The electronic device may store the third model 240-3 in the volatile memory based on the first area, the second area, and the fourth area of the volatile memory in which parameters indicating the graph 418 are stored. For example, the electronic device may connect the group 412 of graphs included in the second model 240-2 and/or the third model 240-3 and another group 414 of the first model 240-1 different from the group 412.

According to an embodiment, the electronic device may obtain priorities in which an operation corresponding to the graphs (e.g., the groups 412, 414, and 416 and/or the graph 418) stored in the volatile memory is to be performed. The priority may be determined to have a minimum delay (e.g., total minimum inference latency) in which inferences based on one or more models (e.g., the first model 240-1 to the third model 240-3) including the graphs are performed. In an embodiment of FIG. 4, since the group 412 of graphs is common to all the first model 240-1 to the third model 240-3, the electronic device may assign the priority of the group 412 higher than the priority of other graphs (e.g., the graphs included in the groups 414 and 416, and/or the graph 418). In an embodiment of FIG. 4, among other graphs except for the group 412, the group 414 of graphs may be common to two models (the first model 240-1 and the third model 240-3), and other group 416 and graph 418 may be included in a specific model. The electronic device may assign the priority of the group 414 common to the two models, lower than the priority of the group 412 and higher than the priority of the group 416 and the graph 418.

According to an embodiment, the electronic device may execute functions associated with the models based on request of applications corresponding to each of the models, in a state in which models (e.g., the first model 240-1 to the third model 240-3) are stored in the volatile memory. The functions may be executed by the electronic device based on the execution of the model executor 340 of FIG. 3. For example, the electronic device may execute a function associated with the first model 240-1 based on the first model 240-1 stored in the volatile memory. The function may include a function of inferring information included in input data based on the models. According to an embodiment, the electronic device may perform operations on the graphs based on priorities and/or order assigned to the groups 412 and 414 of graphs included in the first model 240-1, based on request for executing the first function for the first model 240-1. The electronic device may store results of performing operations based on the graphs in the first model 240-1 in the volatile memory. Hereinafter, it is assumed that the electronic device identifies request for executing the first function associated with the first model 240-1, in a state in which the result of performing operations based on certain graphs is not stored in the volatile memory. The request may be generated by the first application for the first model 240-1 to perform inference based on the input data by using the first model 240-1.

Referring to FIG. 4, an electronic device according to an embodiment may sequentially perform operations based on connection of graphs in the first model 240-1 based on the input data. The electronic device may obtain the first output data 420-1 by performing operations indicated by the group 412 of graphs in the first model 240-1 on the input data. The electronic device may obtain a pair of the input data and the first output data 420-1 inputted to the group 412. The electronic device may store the obtained pair in the volatile memory. The obtained pair may be recycled based on whether the operations for the group 412 of graphs are performed again. Similarly, the electronic device may obtain the second output data 420-2 by performing operations indicated on the first output data 420-1 by the group 414 connected after the group 412 in the first model 240-1. The electronic device may obtain a pair of the input data (e.g., the first output data 420-1) inputted to the group 414 and the output data (e.g., the second output data 420-2) for the input data. The second output data 420-2 may be processed based on the execution of a first application associated with the first model 240-1 as the result of performing operations indicated by the first model 240-1.

According to an embodiment, the electronic device may store the output data, which is the result of performing the operations indicated by the graphs in the model, in the memory (e.g., the volatile memory 132 and/or the non-volatile memory 134 of FIG. 2). In the above example, in which the electronic device sequentially performs the operations based on the connection of the graphs in the first model 240-1, the electronic device may store the first output data 420-1 to the second output data 420-2, which are the result of performing the operations indicated by each of the groups 412 and 414. The electronic device may store the first output data 420-1 and/or the second output data 420-2 in the memory based on a preset format readable by all accelerators (e.g., the CPU 210, the NPU 220, and/or the GPU 230) included in the electronic device.

According to an embodiment, the preset format readable by all the different accelerators (e.g., the CPU 210, the NPU 220, and/or the GPU 230) included in the electronic device may have a data structure associated with a buffer (e.g., direct memory access (DMA)-buffer (BUF) managed by a memory manager (e.g., ION) executed by the electronic device. For example, the electronic device may store the first output data 420-1 to the second output data 420-2 having the preset format, in the buffer shared with the accelerators in the volatile memory. Since the first output data 420-1 to the second output data 420-2 are stored in the buffer, the first output data 420-1 to the second output data 420-2 stored in the buffer may not be copied to different buffers in the volatile memory allocated to each of the different accelerators. For example, the accelerators may directly access the first output data 420-1 to the second output data 420-2 stored in the buffer.

In an embodiment of FIG. 4, it is assumed that the electronic device performs operations on the graphs divided into the groups 412 and 414 in the first model 240-1, and then simultaneously executes functions for the second model 240-2 to the third model 240-3. For example, the electronic device may identify requests for performing inferences based on the second model 240-2 to the third model 240-3, based on the execution of the second application to the third application corresponding to each of the second model 240-2 to the third model 240-3. Based on identifying the requests, the electronic device may perform operations indicated by each of the second model 240-2 to the third model 240-3. Hereinafter, according to an embodiment, it is assumed that the electronic device identifies requests for performing operations indicated by the second model 240-2 to the third model 240-3, based on the input data inputted to the first model 240-1.

According to an embodiment, the electronic device may bypass at least one of operations indicated by a specific model based on redundancy of graphs included in models stored in the volatile memory and/or output data. Hereinafter, the bypassed operations may be referred to as a dense operation. In the above assumption, since all the first model 240-1 to the third model 240-3 share the group 412 of graphs, based on the requests, the electronic device may identify a history of performing operations based on the group 412 before performing operations indicated by the second model 240-2 to the third model 240-3. In the volatile memory, based on the performance of the operations indicated by the first model 240-1, in a state in which a pair of input data associated with the group 412 and first output data 420-1 is stored, the electronic device may bypass performing operations indicated by the group 412 based on the requests. In the above state, the electronic device may execute at least one of functions for the second model 240-2 to the third model 240-3 by using the first output data 420-1 stored based on a preset format readable by the different accelerators. For example, in case that operations are performed on each of the second model 240-2 and the third model 240-3 by using the different accelerators, the accelerators may directly access the first output data 420-1 independently of the buffers dedicated to each of the accelerators based on the preset format. For example, the accelerators may access the first output data 420-1 independently of copying the first output data 420-1 to the buffers.

In the above-described assumption, according to an embodiment, the electronic device may perform operations indicated by the graphs based on the priorities assigned to each of the graphs (e.g., the groups 412, 414, and 416, and the graph 418) included in the second model 240-2 to the third model 240-3. In a state in which operations indicated by graphs in the group 412 are bypassed based on the first output data 420-1, the electronic device may perform operations indicated by the group 414 having the highest priority among the graphs included in the groups 414 and 416 and the graph 418. In the above assumption, since operations are performed on the first output data 420-1 based on the group 414 included in the first model 240-1, the electronic device may bypass operations indicated by the graphs in the group 414 in the third model 240-3 based on the second output data 420-2, which is a result of performing operations on the first output data 420-1 based on the group 414. For example, operations indicated by the graph 418 in the third model 240-3 may be performed based on the second output data 420-2 stored in the volatile memory of the electronic device. Similarly, operations indicated by the graphs in the group 416 of the second model 240-2 may be performed based on the first output data 420-1.

As described above based on the above assumption, according to an embodiment, the electronic device may identify a pair of the input data and the output data inputted to the graph based on the driving of a specific model among the models, based on identifying the graph commonly included in the models. In case that it is identified that the input data included in the pair is re-inputted into the graph based on driving of another model different from the specific model among the models, the electronic device may execute a function for the other model based on the output data included in the pair. For example, in response to executing a function for the second model 240-2 based on the input data inputted into the graphs in the group 412 of the first model 240-1, the electronic device may identify the first output data 420-1 for the input data. The electronic device may omit or bypass operations corresponding to the graphs in the group 412 of the second model 240-2 based on the first output data 420-1. For example, the first output data 420-1 may be input as graphs in the group 416 connected next to the group 412 in the second model 240-2. In the above example, the performance of operations associated with the graphs in the group 412 may be bypassed based on the first output data 420-1.

As described above, according to an embodiment, the electronic device may at least partially omit operations by driving each of the models, by using the graphs (e.g., the graphs included in each of the groups 412 and 414) shared between the models, and results (e.g., the first output data 420-1 to the second output data 420-2) of performing operations indicated by the above graphs. For example, in case that operations for the graphs in the group 412 are repeatedly requested, the electronic device may omit the operations by using the first output data 420-1 corresponding to the group 412. For example, in case that the operations for the graphs in the group 412 are repeatedly requested by using the input data corresponding to the first output data 420-1, the electronic device may bypass the operations by using the first output data 420-1. After the electronic device performs the operations associated with the first model 240-1, in the assumption that the operations associated with the second model 240-2 and the third model 240-3 are substantially simultaneously performed, the electronic device may bypass the operations associated with the graphs in the groups 412 and 414 among operations associated with the second model 240-2 and the third model 240-3 by using the first output data 420-1 and the second output data 420-2. Since the operations associated with the graphs in the groups 412 and 414 are bypassed, the time for performing the operations associated with the second model 240-2 and the third model 240-3 may be reduced. The electronic device may reduce the amount of operation of the accelerators in the electronic device by using the dense operation. Since the amount of operation of the accelerators is reduced, the resource of the electronic device may be efficiently used. Since the amount of operation of the accelerators is reduced, the power consumption of the electronic device may be reduced. Since the power consumption is reduced, the amount of battery usage in the electronic device may be reduced.

In addition to sharing the graph commonly included in the different models and/or the output data, the electronic device may perform optimization of at least one of the models based on the graph common to the models. Hereinafter, with reference to FIG. 5, an example of an operation in which an electronic device performs optimization on the specific model by using graphs included in the specific model and all other models according to an embodiment will be described.

FIG. 5 illustrates an example of an operation in which an electronic device performs optimization on a graph commonly included in different models, according to an embodiment. The electronic device of FIG. 5 may be an example of the electronic device of FIGS. 1 to 4. For example, an electronic device 101 of FIG. 2 may include the electronic device of FIG. 5. A first model 240-1 to a fifth model 240-5 of FIG. 5 may be included in a model 240 of FIG. 2. For example, the first model 240-1 to a second model 240-2 of FIG. 3 may include each of the first model 240-1 to the second model 240-2 of FIG. 5. The operation of the electronic device described later with reference to FIG. 5 may be performed by an accelerator (e.g., a CPU 210, a NPU 220, and/or a GPU 230) illustrated in FIG. 2.

According to an embodiment, the electronic device may optimize the model based on offline compile and/or online compile. The optimizing the model may include reducing the number of layers, operations, and/or graphs included in the model, with a preset accuracy, and/or inference latency as a limit. The offline compile may include optimizing the model based on interaction between the user and the electronic device. The online compile may include optimizing the model based on an exclusive operation of the electronic device independently of the user. Referring to FIG. 5, according to an embodiment, the electronic device may obtain the fifth model 240-5 by optimizing the second model 240-2. The electronic device may obtain the fifth model 240-5 based on a preset accuracy less than or equal to the accuracy of the second model 240-2. The accuracy and/or the inference latency of the fifth model 240-5 may be included in the evaluation data for the fifth model 240-5.

In a state in which the fifth model 240-5 is obtained based on the optimization of the second model 240-2, according to an embodiment, the electronic device may obtain a fourth model 240-4 by optimizing the first model 240-1. The optimizing the first model 240-1 may be performed based on the online compile of the electronic device for the first model 240-1. For example, the electronic device may optimize the first model 240-1 in response to request for the online compile for the first model 240-1. In the above state, according to an embodiment, the electronic device may optimize the first model 240-1 based on one or more graphs commonly included in the first model 240-1 and the second model 240-2.

Referring to FIG. 5, the first model 240-1 and the second model 240-2 may commonly include graphs in a group 412. According to an embodiment, in response to request for performing optimization of the first model 240-1, the electronic device may identify a group 510 corresponding to graphs in the group 412 commonly included in the first model 240-1 and the second model 240-2, in the fifth model 240-5 which is the result of performing optimization on the second model 240-2. For example, the graphs in the group 510 of the fifth model 240-5 may be a result of optimizing the graphs in the group 412 of the second model 240-2. According to an embodiment, the electronic device may optimize the graphs in the group 412 of the first model 240-1 based on the graphs in the group 510 of the fifth model 240-5. For example, the fourth model 240-4 obtained by optimizing the first model 240-1 by the electronic device may include the group 510. In the first model 240-1, a group 414 of graphs different from a group 412 of graphs included in both the first model 240-1 and the second model 240-2 may be optimized to the graph 520 by the electronic device. Similarly, in the second model 240-2, a group 416 of graphs different from the group 412 of graphs may be optimized by the electronic device to a group 530 of graphs in the fifth model 240-5.

Referring to FIG. 5, structures of the fourth model 240-4 to the fifth model 240-5 obtained by optimizing each of the first model 240-1 and the second model 240-2 by the electronic device according to an embodiment are exemplarily illustrated. Since the electronic device optimizes the first model 240-1 by using the fifth model 240-5 obtained based on the optimization of the second model 240-2, the electronic device may optimize the first model 240-1 based on the mapping between the graphs of the second model 240-2 and the graphs of the fifth model 240-5. For example, based on the graphs in the group 412 included in both the first model 240-1 and the second model 240-2, the electronic device may optimize the first model 240-1 by using the group 510 corresponding to the group 412 among the graphs of the fifth model 240-5. In the above example, the electronic device may obtain the fourth model 240-4 including the group 510 of the fifth model 240-5 as a result of optimizing the first model 240-1.

As described above, according to an embodiment, the electronic device may identify a group 510 of graphs obtained from graphs in the group 412 commonly included in the first model 240-1 and the second model 240-2, based on the optimization, among the graphs of the second model 240-2 different from the first model 240-1, based on request for obtaining the fourth model 240-4 from the first model 240-1, based on the optimization. The electronic device may obtain the fourth model 240-4 by optimizing the first model 240-1 based on the group 510. For example, the fourth model 240-4 and the fifth model 240-5 which are the results of optimizing the first model 240-1 and the second model 240-2 may include the group of graphs 510 corresponding to the group 412 of graphs commonly included in the first model 240-1 and the second model 240-2. Since the electronic device uses a result (e.g., the group of graphs 510) of optimizing the group 412 of graphs in the second model 240-2, to optimize the first model 240-1 including the group 412, the electronic device may reduce the amount of computation, power consumption, and/or heat generation associated with the online compile. For example, the electronic device may increase the speed associated with the online compile and may reduce the time required for the online compile.

Hereinafter, exemplary flowcharts of operations of the electronic device according to an embodiment will be described with reference to FIGS. 6 to 7.

FIG. 6 illustrates an example of a flowchart for describing an operation of an electronic device, according to an embodiment. The electronic device of FIG. 6 may be an example of the electronic device of FIGS. 1 to 5. For example, an electronic device 101 of FIG. 2 may include the electronic device of FIG. 6. The operations of FIG. 6 may be performed by processors (e.g., a CPU 210, a NPU 220, and/or a GPU 230) referred to as accelerators in FIG. 2. The operation of FIG. 6 may be performed based on the execution of a model builder 330 of FIG. 3.

Referring to FIG. 6, in operation 610, according to an embodiment, the electronic device may identify first graphs included in a first model stored in a non-volatile memory. The electronic device may identify the first graphs included in the first model based on request for driving the first model stored in the non-volatile memory (e.g., a non-volatile memory 134 of FIG. 2). The electronic device may identify the request based on the execution of a first application corresponding to the first model. According to an embodiment, the electronic device may identify the first graphs corresponding to operations associated with an artificial neural network, respectively, based on a plurality of parameters representing the first model in the non-volatile memory.

Referring to FIG. 6, in operation 620, according to an embodiment, the electronic device may identify at least one graph corresponding to at least one of the first graphs among second graphs included in one or more second models stored in a volatile memory (e.g., a volatile memory 132 in FIG. 2). The one or more second models may be stored in the volatile memory of the electronic device before performing the operation 610. The electronic device may obtain information indicating the first graphs stored in the non-volatile memory different from the volatile memory and included in the first model. The information may include the plurality of parameters representing the first model. The electronic device may identify at least one graph matching at least one of the first graphs among the second graphs by comparing the plurality of parameters representing the first model and a plurality of parameters representing the second graphs included in the one or more second models. For example, the electronic device may identify at least one graph associated with both the first model and the second model different from the first model in the volatile memory of the electronic device, based on request for executing the first function for the first model associated with the artificial neural network. The electronic device may identify the at least one graph corresponding to at least one operation commonly performed by the first model and the second model among different operations associated with the artificial neural network.

Referring to FIG. 6, in operation 630, according to an embodiment, the electronic device may obtain an instance for controlling the first model based on at least one identified graph. The electronic device may store the first model in the volatile memory based on at least one graph identified based on the operation 620. The timing at which the electronic device stores the first model in the volatile memory may be different from the timing at which the instance of the operation 630 is obtained. Based on storing the first model in the volatile memory, the electronic device may obtain the instance for the first model. The instance may be executed by the processor of the electronic device to perform operations based on the first model stored in the volatile memory. According to an embodiment, the electronic device may connect the at least one graph of the operation 620, identified among the second graphs in the volatile memory, and other graphs different from the at least one graph among the first graphs. Since the graphs of different models are connected to each other, in the volatile memory, graphs for driving a specific model may be recycled for another model. The electronic device may store, in the volatile memory, the first graphs in the first model based on a preset format readable by different processors in the electronic device. The electronic device may assign priorities to each of the first graphs in the first model stored in the volatile memory, based on whether the first graphs match the second graphs.

Referring to FIG. 6, in operation 640, according to an embodiment, the electronic device may execute a function associated with the first model based on the instance of the operation 630. Based on the operations 610, 620, and 630 of FIG. 6, at least one of the second graphs included in one or more second models different from the first model may be used to execute the function associated with the first model. The function associated with the first model may include a function of performing inference on input data. The function associated with the first model may include performing operations corresponding to first graphs in the first model. For example, the electronic device may perform operations indicated by the first graphs, based on priorities assigned to each of the first graphs. According to an embodiment, the electronic device may identify output data obtained from the input data based on the at least one graph, in the volatile memory, based on executing the function of the operation 640 based on the input data inputted into the at least one graph of the operation 620. Based on identifying the output data, the electronic device may bypass at least one operation corresponding to the at least one graph among operations corresponding to each of the first graphs in the first model. The electronic device may execute the function by using the output data stored based on a preset format readable by the different processors (e.g., the accelerators such as the CPU 210, the NPU 220, and/or the GPU 230 in FIG. 2). For example, the electronic device may access the output data stored by a second processor different from the first processor among the processors, in a state of executing the function of the operation 640 based on the first processor among the processors. That the electronic device accesses the output data may be performed independently of copying the output data based on the preset format.

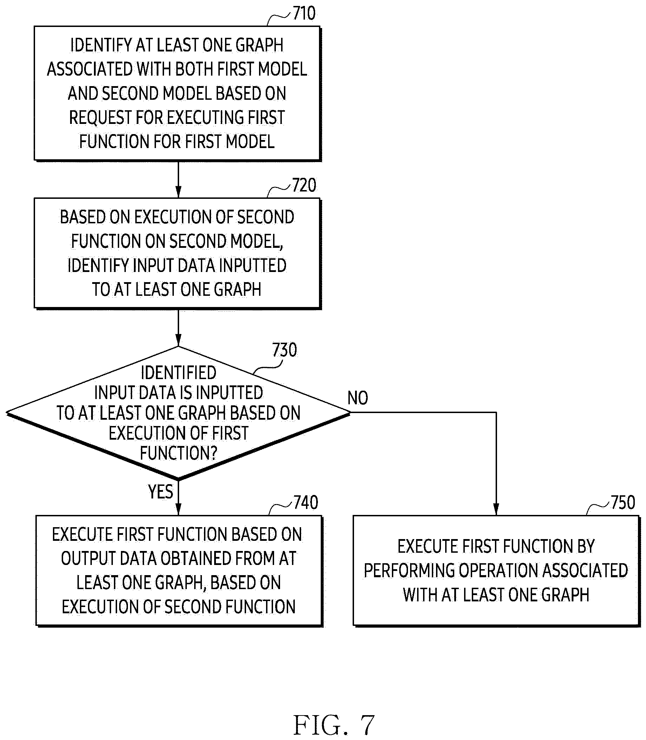

FIG. 7 illustrates an example of a flowchart for describing an operation of an electronic device, according to an embodiment. The electronic device of FIG. 7 may be an example of the electronic device of FIGS. 1 to 6. For example, an electronic device 101 of FIG. 2 may include the electronic device of FIG. 7. The operation of FIG. 7 may be performed by processors (e.g., a CPU 210, a NPU 220, and/or a GPU 230) referred to as accelerators in FIG. 2. The operation of FIG. 7 may be performed based on the execution of a model executor 340 of FIG. 3.

Referring to FIG. 7, in operation 710, according to an embodiment, the electronic device may identify at least one graph associated with both the first model and the second model based on request for executing the first function for the first model. The first model and the second model may be stored in a volatile memory (e.g., the volatile memory 132 of FIG. 2) of the electronic device based on at least one of the operations of FIG. 6. The electronic device may identify graphs commonly included in the first model and the second model in the volatile memory.

Referring to FIG. 7, in operation 720, according to an embodiment, the electronic device may identify input data inputted to at least one graph based on the execution of the second function on the second model. The second function may be a function that was executed by the electronic device before the operation 710. For example, the electronic device may identify whether at least one operation based on at least one graph associated with both the first model and the second model was performed before the request of the operation 710. In case that the at least one operation based on the at least one graph is performed before the request of the operation 710, the electronic device may identify the input data used in the at least one operation.

Referring to FIG. 7, in operation 730, according to an embodiment, the electronic device may identify whether the input data identified based on the operation 720 is inputted to at least one graph based on the execution of the first function. For example, the electronic device may identify whether the input data associated with the request of the operation 710 matches the input data of the operation 720.

In case that the input data identified based on the operation 720 is inputted to at least one graph based on the execution of the first function of the operation 710 (730-yes), in operation 740, according to an embodiment, the electronic device may execute the first function based on output data obtained from at least one graph based on the execution of the second function. The output data may match the input data of the operation 720. The output data may be a result obtained by the electronic device performing at least one operation indicated by the at least one graph on the input data based on the execution of the second function of the operation 720.

Referring to the operations 710, 720, 730, and 740, based on identifying at least one graph associated with both the first model and the second model, the electronic device may identify the input data and/or the output data corresponding to the input data inputted to the at least one graph based on the execution of the second function for the second model. Based on identifying that the input data is inputted to the at least one graph based on the execution of the first function of the operation 710, the electronic device may execute the first function based on the output data. For example, the electronic device may input the output data to a graph connected next to the at least one graph of the operation 710 among a plurality of graphs indicated by the first model. Based on the input of the output data, in the electronic device, the performance of the operation associated with the at least one graph in the first model associated with the request of the operation 710 may be bypassed.

In case that the input data identified based on the operation 720 is not inputted to at least one graph associated with both the first model and the second model based on the execution of the first function of the operation 710 (730-No), in operation 750, according to an embodiment, the electronic device may execute the first function by performing the operation associated with at least one graph. Referring to the operations 730, 740, and 750, based on the history in which input data for the execution of the first function of the operation 710 is input, to at least one graph associated with both the first model and the second model, the electronic device may omit the operation associated with the at least one graph. After executing the first function based on the operation 750, the electronic device may store the output data obtained from the input data based on the at least one graph in the memory. The output data may be recycled based on another request for inputting the input data to the at least one graph.

As described above, according to an embodiment, the electronic device may recycle at least one graph and/or at least one operation commonly included in different models. For example, the electronic device may use an area of the volatile memory in which the at least one graph is stored for all the models. The electronic device may recycle a pair of the input data inputted to the at least one graph and the output data corresponding to the input data based on repetitive performance of the operation based on the input data and the at least one graph. For example, by using the output data, the electronic device may bypass performing at least one operation indicated by the at least one graph based on the input data. The electronic device may prevent an inference latency and/or an increase in power consumption, generated by repeated performance of the at least one operation, by bypassing performing the at least one operation.

In a state in which an electronic device performs operations based on different models, a method for reducing a delay caused by performing the operations may be required. As described above, an electronic device (e.g., an electronic device 101 of FIG. 2) may comprise a non-volatile memory (e.g., a non-volatile memory 134 of FIG. 2), a volatile memory (e.g., a volatile memory 132 of FIG. 2), and a processor. The non-volatile memory may store instructions. The instructions may be configured to, when executed by the processor, cause the electronic device to identify, based on request for driving a first model (e.g., a first model 240-1 of FIG. 3) stored in the non-volatile memory, first graphs included in the first model. The instructions may be configured to, when executed by the processor, cause the electronic device to identify at least one graph among second graphs which is corresponded to at least one of the first graphs, wherein the second graphs are included in one or more second models stored in the volatile memory and are different from the first model. The instructions may be configured to, when executed by the processor, cause the electronic device to obtain an instance for controlling the first model based on the at least one graph identified among the second graphs. The instructions may be configured to, when executed by the processor, cause the electronic device to execute a function associated with the first model based on the instance. According to an embodiment, the electronic device may electronic device may reduce the delay generated by the performing of the operations by reducing the number of times operations common to different models are performed.

For example, the instructions may be configured to, when executed by the processor, cause the electronic device to identify, based on a plurality of parameters representing the first model, the first graphs in the non-volatile memory, wherein each of the first graphs is corresponding to each of operations associated with artificial neural network.

For example, the instructions may be configured to, when executed by the processor, cause the electronic device to identify, by comparing a plurality of parameters representing the first model and a plurality of parameters representing the second graphs included in the one or more second models, the at least one graph among the second graphs which is matched to at least one of the first graphs.

For example, the instructions may be configured to, when executed by the processor, cause the electronic device to obtain the instance regarding the first model based on the first model stored in the volatile memory.

For example, the instructions may be configured to, when executed by the processor, cause the electronic device to, based on executing the function based on input data inputted to the at least one graph corresponding to the first graphs, identify, in the volatile memory, output data which is obtained from the input data based on performing of at least one operation based on the at least one graph. The processor may be configured to bypass, based on identifying the output data, at least one operation corresponding to the at least one graph among operations respectively corresponding to the first graphs in the first model.

For example, the instructions may be configured to, when executed by the processor, cause the electronic device to execute the function by using the output data which is stored based on a preset format readable by different processors included in the electronic device.

For example, the electronic device may further comprise, a second processor different from the processor, which is the first processor. The instructions may be configured to, when executed by the first processor, cause the electronic device to access, in a state executing a function associated with the first model, the output data stored by the second processor independent from duplicating the output data based on the format.

For example, the instructions may be configured to, when executed by the processor, cause the electronic device to connect, in the volatile memory, other graphs different from the at least one graph among the at least one graph and the first graphs.

For example, the instructions may be configured to, when executed by the processor, cause the electronic device to store, based on a preset format readable by another processor different from the processor, the other graphs in the volatile memory.

For example, the instructions may be configured to, when executed by the processor, cause the electronic device to identify, based on another request for obtaining third model from the first model based on optimization, at least one second graph among the second graphs that is converted from at least one of the first graphs in the first model based on the optimization. The instructions may be configured to, when executed by the processor, cause the electronic device to obtain, based on the identified at least one second graph, the third model.

As described above, according to an embodiment, a method of an electronic device, may comprise in a volatile memory of the electronic device, identifying (e.g., operation 710 of FIG. 7), based on request for executing a first function regarding a first model associated with an artificial neural network, at least one graph associated with both the first model and a second model different from the first model. The method may comprise identifying (e.g., operation 720 of FIG. 7), based on identifying the at least one graph, an input data that is inputted to the at least one graph based on execution of a second function regarding the second model. The method may comprise executing (e.g., operation 740 of FIG. 7), based on identifying that the input data is inputted to the at least one graph based on execution of the first function, the first function based on an output data which is obtained from the at least one graph based on execution of the second function and is corresponding to the input data.

For example, the identifying the at least one graph may comprise identifying, among different operations associated with the artificial neural network, the at least one graph corresponding to at least one operation commonly performed by the first model and the second model.

For example, the identifying the at least one graph may comprise obtain information indicating a plurality of graphs included in the first model, wherein the information is stored in a non-volatile memory different from the volatile memory. The identifying the at least one graph may comprise based on the information, connect, among the at least one graph identified in the volatile memory and the plurality of graphs, other graphs different from the at least one graph.

For example, the executing the first function may comprise inputting, based on identifying that the input data is inputted to the at least one graph based on execution of the first function, the output data to a graph connected next to the at least one graph among a plurality of graphs indicated by the first model.

For example, the inputting the output data may comprise bypassing, based on the output data, performing operation associated with the at least one graph.

For example, the executing the first function may comprise performing operations regarding the graphs included in the first model based on priorities assigned to graphs included in the first model and graphs included in the second model, wherein the first model is stored in the volatile memory.

As described above, according to an embodiment, a method of an electronic device may comprise identifying (e.g., operation 610 of FIG. 6), based on request for driving a first model stored in a non-volatile memory of the electronic device, first graphs included in the first model. The method may comprise identifying (e.g., operation 620 of FIG. 6), among second graphs included in one or more second models stored in a volatile memory of the electronic device which are different from the first model, at least one graph corresponding to at least one of the first graphs. The method may comprise obtaining (e.g., operation 630 of FIG. 6), based on the at least one graph identified among the second graphs, an instance for controlling the first model. The method may comprise executing (e.g., operation 640 of FIG. 6), based on the instance, a function associated with the first model.

For example, the identifying the first graphs may comprise in the non-volatile memory, identifying, based on a plurality of parameters representing the first model, the first graphs respectively corresponding to operations associated with an artificial neural network.

For example, the identifying the at least one graph may comprise identifying, by comparing a plurality of parameters representing the first model and a plurality of parameters representing the second graphs included in one or more second model, the at least one graph matched to at least one of the first graphs among the second graphs.

For example, the storing the first model in the volatile memory may comprise obtaining the instance regarding the first model based on the first model stored in the volatile memory.

For example, the executing may include, based on executing the function based on input data inputted to the at least one graph corresponding to the first graphs, identifying, in the volatile memory, output data which is obtained from the input data based on performing of at least one operation based on the at least one graph. The executing may include bypassing, based on identifying the output data, at least one operation corresponding to the at least one graph among operations respectively corresponding to the first graphs in the first model.

For example, the identifying the output data may include an executing the function by using the output data stored based on a preset format readable by different processors in the electronic device.

As described above, according to an embodiment, an electronic device (e.g., an electronic device 101 of FIG. 2), may comprise a volatile memory (e.g., an volatile memory 132 of FIG. 2) and a processor. The non-volatile memory may store instructions. The instructions may be configured to, when executed by the processor, cause the electronic device to identify at least one graph associated with both the first model and a second model different from the first model in the volatile memory, based on request for executing a first function regarding a first model (e.g., a first model 240-1 of FIG. 3) associated with an artificial neural network. The instructions may be configured to, when executed by the processor, cause the electronic device to identify, based on identifying the at least one graph, an input data that is inputted to the at least one graph based on execution of a second function regarding the second model. The instructions may be configured to, when executed by the processor, cause the electronic device to execute, based on identifying that the input data is inputted to the at least one graph based on execution of the first function, the first function based on an output data which is obtained from the at least one graph based on execution of the second function and is corresponding to the input data.

For example, the instructions may be configured to, when executed by the processor, cause the electronic device to identify, among different operations associated with the artificial neural network, the at least one graph corresponding to at least one operation commonly performed by the first model and the second model.

For example, the instructions may be configured to, when executed by the processor, cause the electronic device to obtain information indicating a plurality of graphs included in the first model, wherein the information is stored in a non-volatile memory different from the volatile memory. For example, the instructions may be configured to, when executed by the processor, cause the electronic device to based on the information, connect, among the at least one graph identified in the volatile memory and the plurality of graphs, other graphs different from the at least one graph.

For example, the instructions may be configured to, when executed by the processor, cause the electronic device to input, based on identifying that the input data is inputted to the at least one graph based on execution of the first function, the output data to a graph connected next to the at least one graph among a plurality of graphs indicated by the first model.

For example, the instructions may be configured to, when executed by the processor, cause the electronic device to perform operations regarding the graphs included in the first model based on priorities assigned to graphs included in the first model and graphs included in the second model, wherein the first model is stored in the volatile memory.

As described above, according to an embodiment, an electronic device (e.g., an electronic device 101 of FIG. 2) may comprise a non-volatile memory (e.g., a non-volatile memory 134 of FIG. 2), a volatile memory (e.g., a volatile memory 132 of FIG. 2), and a processor. The non-volatile memory may store instructions. The instructions may be configured to, when executed by the processor, cause the electronic device to identify a model including a first connection of first graphs based on request for driving the model stored in the non-volatile memory among the volatile memory and the non-volatile memory. The instructions may be configured to, when executed by the processor, cause the electronic device to, based on identifying at least one second graph from the first graphs that is stored in the volatile memory for driving another model, store, in the volatile-memory, one or more third graphs from the first graphs different from the at least one second graph. The instructions may be configured to, when executed by the processor, cause the electronic device to perform computations indicated by a second connection of the at least one second graph and the one or more third graphs to driving the model with respect to the request.

The apparatus described above may be implemented as a combination of hardware components, software components, and/or hardware components and software components. For example, the devices and components described in the embodiments may be implemented using one or more general purpose computers or special purpose computers such as processors, controllers, arithmetical logic unit(ALU), digital signal processor, microcomputers, field programmable gate array (FPGA), PLU(programmable logic unit), microprocessor, any other device capable of executing and responding to instructions. The processing device may perform an operating system OS and one or more software applications performed on the operating system. In addition, the processing device may access, store, manipulate, process, and generate data in response to execution of the software. For convenience of understanding, although one processing device may be described as being used, a person skilled in the art may see that the processing device may include a plurality of processing elements and/or a plurality of types of processing elements. For example, the processing device may include a plurality of processors or one processor and one controller. In addition, other processing configurations, such as a parallel processor, are also possible.

The software may include a computer program, code, instruction, or a combination of one or more of them and configure the processing device to operate as desired or command the processing device independently or in combination. Software and/or data may be embodied in any type of machine, component, physical device, computer storage medium, or device to be interpreted by a processing device or to provide instructions or data to the processing device. The software may be distributed on a networked computer system and stored or executed in a distributed manner. Software and data may be stored in one or more computer-readable recording media.

The method according to the embodiment may be implemented in the form of program instructions that may be performed through various computer means and recorded in a computer-readable medium. In this case, the medium may continuously store a computer-executable program or temporarily store the program for execution or download. In addition, the medium may be a variety of recording means or storage means in which a single or several hardware are combined and is not limited to media directly connected to any computer system and may be distributed on the network. Examples of media may include magnetic media such as hard disks, floppy disks and magnetic tapes, optical recording media such as CD-ROMs and DVDs, magneto-optical media such as floppy disks, ROMs, RAMs, flash memories, and the like to store program instructions. Examples of other media include app stores that distribute applications, sites that supply or distribute various software, and recording media or storage media managed by servers.

Although embodiments have been described according to limited embodiments and drawings as above, various modifications and modifications are possible from the above description to those of ordinary skill in the art. For example, even if the described techniques are performed in a different order from the described method, and/or components such as the described system, structure, device, circuit, and the like are combined or combined in a different form from the described method or are substituted or substituted by other components or equivalents, appropriate results may be achieved.

Therefore, other implementations, other embodiments, and equivalents to the claims fall within the scope of the claims to be described later.

## Claims

1. An electronic device (101) comprising:
a non-volatile memory (134);
a volatile memory (132); and
a processor (210, 220, 230);
wherein the non-volatile memory stores instructions, wherein the instructions are configured to, when executed by the processor, cause the electronic device to:
identify (610), based on request for driving a first model (240-1) stored in the non-volatile memory (134), first graphs (412, 414) included in the first model (240-1);
identify (620) at least one graph (412) among second graphs (412, 416) which is corresponded to at least one of the first graphs (412, 414), wherein the second graphs (412, 416) are included in one or more second models (240-2) stored in the volatile memory (132) and are different from the first model (240-1);
obtain (630) an instance for controlling the first model (240-1) based on the at least one graph (412) identified among the second graphs (412, 416); and
execute (640) a function associated with the first model (240-1) based on the instance.

2. The electronic device (101) of claim 1, wherein the instructions are configured to, when executed by the processor, cause the electronic device to:
identify, based on a plurality of parameters representing the first model (240-1), the first graphs stored in the non-volatile memory (134), wherein each of the first graphs is corresponding to each of operations associated with an artificial neural network.

3. The electronic device (101) of claim 2, wherein the instructions are configured to, when executed by the processor, cause the electronic device to:
identify, by comparing a plurality of parameters representing the first model (240-1) and a plurality of parameters representing the second graphs included in the one or more second models (240-2), the at least one graph from the second graphs which is matched to at least one of the first graphs.

4. The electronic device (101) of any one of the preceding claims, wherein the instructions are configured to, when executed by the processor, cause the electronic device to:
obtain the instance regarding the first model (240-1) based on the first model (240-1) stored in the volatile memory (132).

5. The electronic device (101) of any one of the preceding claims, wherein the instructions are configured to, when executed by the processor, cause the electronic device to:
based on executing the function based on input data inputted to the at least one graph corresponding to the first graphs, identify, in the volatile memory (132), output data which is obtained from the input data based on performing of at least one operation based on the at least one graph; and
bypass, based on identifying the output data, at least one operation corresponding to the at least one graph among operations respectively corresponding to the first graphs in the first model (240-1).

6. The electronic device (101) of claim 5, wherein the instructions are configured to, when executed by the processor, cause the electronic device to:
execute the function by using the output data which is stored based on a preset format readable by distinct processors (210, 220, 230) included in the electronic device (101).

7. The electronic device (101) of claim 6 further comprises, a second processor (220) different from the processor (210, 220, 230), which is the first processor (210), and
wherein the instructions are configured to, when executed by the first processor (210), cause the electronic device to:
access, in a state executing a function associated with the first model (240-1), the output data stored by the second processor (220) independent from duplicating the output data based on the format.

8. The electronic device (101) of any one of the preceding claims, wherein the instructions are configured to, when executed by the processor, cause the electronic device to:
connect, in the volatile memory (132), other graphs different from the at least one graph among the at least one graph and the first graphs.

9. The electronic device (101) of claim 8, wherein the instructions are configured to, when executed by the processor, cause the electronic device to:
store, based on a preset format readable by another processor (210, 220, 230) different from the processor (210, 220, 230), the other graphs in the volatile memory (132).

10. The electronic device (101) of any one of the preceding claims, wherein the instructions are configured to, when executed by the processor, cause the electronic device to:
identify, based on another request for obtaining third model (240-3) from the first model (240-1) based on optimization, at least one second graph from the second graphs that is converted from at least one of the first graphs in the first model (240-1) based on the optimization;
obtain, based on the identified at least one second graph, the third model (240-3).

11. A method of an electronic device (101), comprising:
in a volatile memory (132) of the electronic device (101),
identifying (710), based on request for executing a first function regarding a first model (240-1) associated with an artificial neural network, at least one graph (412) associated with both the first model (240-1) and a second model (240-2) different from the first model (240- 1);
identifying (720), based on identifying the at least one graph (412), an input data that is inputted to the at least one graph (412) based on execution of a second function regarding the second model (240-2); and
executing (740), based on identifying that the input data is inputted to the at least one graph (412) based on execution of the first function, the first function based on an output data (420-1) which is obtained from the at least one graph (412) based on execution of the second function and is corresponding to the input data.

12. The method of claim 11, wherein the identifying the at least one graph comprises:
identifying, among distinct operations associated with the artificial neural network, the at least one graph corresponding to at least one operation commonly performed by the first model (240-1) and the second model (240-2).

13. The method of any one of claims 11 and 12, wherein the identifying the at least one graph comprises:
obtain information indicating a plurality of graphs included in the first model (240-1), wherein the information is stored in a non-volatile memory (134) different from the volatile memory (132),
based on the information, connect, among the at least one graph identified in the volatile memory (132) and the plurality of graphs, other graphs different from the at least one graph.

14. The method of any one of claims 11 to 13, wherein the executing the first function comprises:
inputting, based on identifying that the input data is inputted to the at least one graph based on execution of the first function, the output data to a graph connected next to the at least one graph from a plurality of graphs indicated by the first model (240-1).

15. The method of claim 14, wherein the inputting the output data comprises:
bypassing, based on the output data, performing operation associated with the at least one graph.
